# EUROPEAN PATENT APPLICATION

(11) **EP 4 589 435 A1**
(43) Date of publication of application: **23.07.2025**
(21) Application number: 24152206.9
(22) Date of filing: 16.01.2024
(51) Int. Cl.: G06F 9/54, G06N 3/08, G06N 5/02, G06N 20/00

(54) **SYSTEM AND METHOD FOR ML-BASED ENGINEERING LIBRARY TRANSLATION AND INTEGRATION, AND FOR SCHEMA & FILE FORMAT MAPPING**

(71) Applicant: ABB SCHWEIZ AG, 5400 Baden (CH)
(72) Inventor: SCHOCH, Nicolai, 69120 Heidelberg (DE); BORRISON, Reuben, 68782 Brühl (DE); HOERNICKE, Mario, 76829 Landau (DE)
(74) Representative: Maiwald GmbH

(57) **Abstract**

The present invention relates to a method, comprising: using an artificial intelligence/machine learning, AI/ML, model to map content between an interface of a first entity for interaction with other entities and an interface of a second entity for interaction with other entities, and/or classify content of the interface of the first entity and/or of the interface of the second entity; and obtaining, from the AI/ML model, a first output indicative of a result of the mapping of the content, and/or of a result of the classification of the content.

## Description

### FIELD OF THE INVENTION

The invention relates to systems and methods for machine learning-based engineering library translation and integration, and for schema and file format mapping.

### BACKGROUND

Today, in the field of Process and Automation Engineering (PAEng) libraries, several engineering projects are commonly based on a variety of different libraries, schemas, and file formats. Hence, the PA libraries landscape will most likely not undergo major changes. Particularly, a reduction of number of libraries is not to be expected, and there may not be any agreement on one specific library/standard to use either. The reasons for that are i.a. that customers demand special libraries for their specific processes. Therefore, the challenge of mapping or at least classifying contents, comprising concepts, namings, classes, relations, parameters, units and even entire method signatures or functionalities, between libraries will remain.

### SUMMARY

However, in view of the above, manual matching, mapping or classifying binds massive amounts of resources and is very error-prone. For example, in order to map concepts from one library, e.g. MinLib, to another library, e.g. PC Device Lib the data of interest (e.g. characterizing elements), like e.g. names, classes, labels, relations, parameters, units, and/or method signatures or functionalities, must be matched or mapped (or at least classified). Thus, support, or even full automation, of the library matching, mapping or classifying processes is required, since it would dramatically reduce cost and/or errors. Hence, support, or even full automation, of the library matching, mapping or classifying processes among several libraries of different content is needed and would dramatically reduce cost and/or errors.

To address one or more of these concerns, there is provided, in a first aspect, a method comprising using an artificial intelligence/machine learning, AI/ML, model to map content between an interface of a first entity for interaction with other entities and an interface of a second entity for interaction with other entities, and/or classify content of the interface of the first entity and/or of the interface of the second entity; and obtaining, from the AI/ML model, a first output indicative of a result of the mapping of the content, and/or of a result of the classification of the content.

That is, given an interface A of the first entity and an interface B of the second entity, names or other handles by which variables, methods, functions or other items of the interface A are exposed may be inputted to the AI/ML model. Based at least in part on the output of the AI/ML model, names or other handles by which the interface B most likely exposes the respective items may then be determined. In many cases, the output of the AI/ML may point to exactly one name or other handle of the interface B. But this is not required. A benefit is achieved as soon as the output of the AI/ML model allows to narrow down the names or other handles of the interface B that may correspond to a particular item exposed by the interface A. For example, the output of the AI/ML model may yield that, out of the 100 names or other handles in interface B, only 10 may be suitable matches for a name or other handle of interface A that references a particular item.

Thus, even if only a part of the names or other handles in interface A may be mapped to names or other handles in interface B automatically, and this mapping may also yield more than one name or other handles in interface B for particular items, this already reduces the amount of manual work required for transforming references to a particular item by names and/or handles exposed by interface A into references to the same item by names and/or handles exposed by interface B.

In this way, the method is able to allow for reducing amounts of resources and/or errors in comparison to a manual mapping or classifying of content between/of different entities. Moreover, the method is further able to allow for being applied to third-party entities, like e.g. third-party libraries, schemas or files, for instance in a case when other MTPs shall be integrated in a tool chain.

There may be many reasons why it is not practical, or even not possible, to unify the used interfaces within an industrial plant. One reason is that, in a complex plant, changes in one place always carry a risk of causing problems in unexpected other places that are directly or indirectly linked to this. Also, a field device in the plant may be of such an old date that software support for changing the interface is no longer available, while the hardware field device itself is still in working order. In some industries, such as nuclear power or other regulated sectors where operations are dependent on government-issued licenses, the conditions of these licenses may impose further constraints as to what may still be changed after the issue of the license, and what must remain unchanged. In an extreme example, even the font and colour with which the control software in a nuclear power plant displays something to the operator must not be changed without permission.

In an example, the first entity may be at least one of a first engineering library, a first standard, a first schema, and a first file format, wherein the second entity may be at least one of a second engineering library, a second standard, a second schema, and a second file format.

In a further example, the method may comprise, using pre-trained embeddings to map content between an interface of a third entity for interaction with other entities and an interface of a fourth entity for interaction with other entities, and/or classify content of the interface of the third entity and/or of the interface of the fourth entity; obtaining, from the pre-trained embeddings, a second output indicative of a result of the mapping of the content, and/or of a result of the classification of the content; training and operating the AI/ML model in shadow mode based on a user feedback received in relation to the second output, and/or based on leveraged labeled data related to the second output; and if the AI/ML model in shadow mode achieves a predetermined maturity, extending the pre-trained embeddings by the AI/ML model. For example, embeddings may be representations of the input that are expressed by numeric feature vectors. Once such a feature vector is available, it may be used as input for all sorts of AI/ML models.

In particular, operation of a to-be-trained AI/ML model in shadow mode alongside pre-trained embeddings or another "active" model may comprise feeding all inputs that go into the "active" model into the to-be-trained AI/ML model as well and optimizing parameters that characterize the behaviour of the to-be-trained AI/ML model with the goal of improving the performance of this to-be-trained AI/ML model. This performance may, for example, be measured using feedback from a process/plant engineer or some other domain expert. At the same time, the "active" model whose output is, at least to a limited extent, already being used in production remains "frozen". That is, the parameters that characterize the behaviour of this active model remain unchanged.

Moreover, in a further example, the third entity may be at least one of a third engineering library, a third standard, a third schema, and a third file format, and wherein the fourth entity may be at least one of a fourth engineering library, a fourth standard, a fourth schema, and a fourth file format.

In a further example, the obtaining of the first output may be based on a one-step-approach or on a two-step-approach, wherein the first output may be a result of a mapping according to the one-step-approach or of a mapping according to the two-step-approach. The one-step-approach may comprise: using the AI/ML model to map the content between the interface of the first entity and the interface of the second entity given inputs and outputs provided via the respective interfaces, the inputs and outputs related to the content. The two-step-approach may comprise: using the AI/ML model to classify the content of the interface of the first entity and/or of the interface of the second entity given inputs and outputs provided via at least one of the respective interfaces, the inputs and outputs related to the content; and using the AI/ML model to map the classified inputs and the classified outputs to the interface of the first entity and/or the interface of the second entity.

Additionally, in a further example, the mapping and/or classifying given the inputs and the outputs may comprise: inputting a first entity input and/or a first entity output related to the content of the interface of the first entity into the AI/ML model, wherein the first entity input and/or the first entity output is related to a first content element of the first entity, the first content element may be at least one of a first name, a first class, a first concept, a first relation and a first parameter, and the first entity may represent a source entity. Such mapping and/or classifying may further comprise, based on the first entity input and/or the first entity output, receiving a model output from the AI/ML model, wherein the model output is related to a second content element different from the first content element, the second content element may be at least one of a second name, a second class, a second concept, a second relation and a second parameter, and/or wherein the model output may be based on a training of the AI/ML model. Moreover, such mapping and/or classifying may further comprise determining, for the model output, a match to a second entity input and/or a second entity output related to the content of the interface of the second entity in relation to at least one of a name, a class, a concept, a relation and a parameter, wherein the second entity may represent a target entity, wherein the model output may be associated with the first output.

In addition, in a further example, the determining of the matching may comprise at least one of: determining a 1-to-1-matching between the first entity input and/or the first entity output and the second entity input and/or the second entity output; determining a 1-to-many-matching between the first entity input and/or the first entity output and the second entity input and/or the second entity output; determining a many-to-1-matching between the first entity input and/or the first entity output and the second entity input and/or the second entity output; and determining a many-to-many-matching between the first entity input and/or the first entity output and the second entity Input and/or the second entity output.

In a further example, using the AI/ML model may be based on or may comprise making use of one of: Obtaining from a joint embedding space the embedding representations and performing thereon-based a nearest neighbor-search, Named Entity Recognition, NER, e.g., based on Transformer-NNs, and Graph-Neural Networks, Graph-NNs.

One advantage of graph neural networks is that they may encode relationships between content items, and in particular that one item may be calculated from other items. For example, if interface A exposes a voltage as well as a current, and interface B exposes a power, then a graph neural network may encode that the power is a product of the voltage and the current.

Moreover, in a further example, the method may further comprise using a knowledge-based component associated with the AI/ML model, which uses underlying knowledge representation systems, such as knowledge graphs, possibly in combination with Graph-NNs, to exploit graph-contained information via the interface of the first entity and/or the interface of the second entity; and further considering the exploited graph-contained information for the mapping and/or the classification related to the interface of the first entity and/or the interface of the second entity.

Additionally, in a further example, the method may further comprise, if the result indicated by the first output comprises an uncertainty value equal to or above a predetermined uncertainty threshold, providing the result to a user for confirmation; and feeding a decision received by the user about whether or not to accept the result back to a knowledge-base associated with the AI/ML model and/or to the AI/ML model.

In a further example, the content may be related to at least one of concepts, namings, classes, relations, parameters, method signatures and method functionalities.

According to a second aspect, there is provided a method, comprising: using pre-trained embeddings to map content between an interface of a third entity for interaction with other entities and an interface of a fourth entity for interaction with other entities, and/or classify content of the interface of the third entity and/or of the interface of the fourth entity; obtaining, from the pre-trained embeddings, a second output indicative of a result of the mapping of the content, and/or of a result of the classification of the content; training and operating an artificial intelligence/machine learning, AI/ML, model in shadow mode based on a user feedback received in relation to the second output, and/or based on leveraged labelled data related to the second output; and if the AI/ML model in shadow mode achieves a predetermined maturity, extending the pre-trained embeddings by the AI/ML model.

According to a third aspect, there is provided a control apparatus for a mapping and/or classifying control system, the control apparatus being configured to carry out the above-outlined methods of the first aspect and/or the second aspect.

According to a fourth aspect, there is provided a mapping and/or classifying control system configured to carry out the above-outlined methods of the first aspect and/or the second aspect.

According to a fifth aspect, there is provided an industrial automation system comprising the control apparatus of the third aspect and/or the mapping and/or classifying control system of the fourth aspect.

The method of the first aspect and/or the second aspect may be computer implemented. Optional features of the first aspect may form part of any of the second to fifth aspects, mutatis mutandis.

According to a sixth aspect, there is provided a computing system configured to perform the method of the first aspect and/or the second aspect.

According to a seventh aspect, there is provided a computer program (product) comprising instructions which, when executed by a computing system, enable or cause the computing system to perform the method of the first aspect and/or the second aspect.

According to an eighth aspect, there is provided a computer-readable (storage) medium comprising instructions which, when executed by a computing system, enable or cause the computing system to perform the method of the first aspect and/or the second aspect. The computer-readable medium may be transitory or non-transitory, volatile or non-volatile.

By using an AI/ML model for mapping and/or classifying purposes as outlined above and as described herein below in more detail, a demand of resources as well as the occurrence of mapping-errors and/or classifying-errors in comparison to such manual processes can be at least reduced.

By "(process) automation system" is meant an industrial plant or production plant comprising one or more pipelines, production lines, and/or assembly lines for transforming one or more educts into a product and/or for assembling one or more components into a final product.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- FIG. 1 illustrates an example overview for an AI/ML model-based mapping and/or classifying process including a feedback loop;
- FIG. 2 illustrates an example method in relation to AI/ML model-based mapping and/or classifying processes; and
- FIG. 3 illustrates another example method in relation to AI/ML model-based mapping and/or classifying processes.

### DETAILED DESCRIPTION

In order to solve the above-outlined drawbacks in the prior art, it is i.a. disclosed herein to use AI/ML to (further-) automate the mapping and transformation of e.g. libraries, schemas, and file formats. Possible ML/AI-methods to make use of (without being limited to these ML/AI-methods) are: Obtaining joint embedding representations and conducting among these nearest-neighbor-search, Named Entity Recognition (NER) (possibly based on Transformer NNs), and Graph-Neural Networks (Graph-NNs), e.g. if underlying information models with concepts and relations are available.

The following is a non-limiting example for an approach overview:
Leverage pre-trained LLMs/Embeddings for out-of-the-box library content classification or mapping, e.g., particularly, when there are no labelled data, i.e., no knowledge about how library 1 (lib1) items map to library 2 (lib2) items.

Leverage labelled data or human expert feedback, beginning in shadow mode/shadow deployment, to train (i.e. to calibrate and/or to fine-tune) an own (e.g. a newly setup) AI/ML model, so this AI/ML model continuously improves and gets expert for, e.g. a particular library-to-library (lib-2-lib) transformation.

Additionally, a knowledge-based component may use underlying knowledge representation systems, e.g., MTP ontology, eBase graph, possibly in combination with Graph NNs, to exploit the graph-contained information, too.

In case of a high uncertainty (i.e. in case a predetermined uncertainty level may be exceeded), the mapping case may be presented to an expert (i.e. domain expert user) for confirmation and the expert's/user's decision (about whether the result being associated with the high uncertainty is correct (or acceptable) or not) is fed back either to the knowledge-base or to the AI/ML model.

Hence, there is provided an AI/ML model to map content e.g. between two (engineering) libraries. Moreover, there is provided a flexible multi-model approach to deal with both, completely unknown lib-2-lib mappings and also with partly known lib-2-lib mappings, and to continuously improve an overall AI/ML-based library integration system. Furthermore, there are provided flexible ideas for deployment in critical environments, which request/allow for user feedback depending on AI/ML-based output uncertainty.

Therefore, the advantageous technical effects are achieved in that i.a. manual matching, which binds massive amounts of resources and which is very error-prone, may be avoided (or at least reduced). Hence, support (or even full automation) of library mapping processes would dramatically reduce cost and/or errors. Moreover, the advantageous technical effects are achieved in that i.a. application to e.g. third-party libraries, files, and schemas may be enabled, e.g. when other MTPs shall be integrated in a given tool chain.

According to various examples, possible AI/ML-methods to make use of for using AI/ML for mapping or classifying e.g. library concepts, file formats and/or schemata comprise (without being limited to these examples): (1) Obtaining joint embedding representations and conducting thereon-based nearest neighbor-search, (2) Named Entity Recognition (NER) (e.g., based on Transformers or x-LSTMs), (3) Graph-NNs (e.g. if concepts and relations are available).

Both (1) and (2) could either use a pre-trained (out-of-the-box) model (e.g., an LLM) or an out-of-the-box embedding, and apply it to map lib1 content to lib2 content. Like this, there are obtainable already pretty-confident/clear lib1-to-lib2 mappings for most fields, e.g. lowest common denominator for different components, like e.g. valve/controller/tank, plus mapping lib1-to-lib2. A rest may be greyed out and/or deactivated, and/or may trigger an expert (user) for feedback.

Moreover, the expert (user) may be continuously asked for feedback to the automated mappings, which are e.g. provided by the AI/ML-methods made use of.

At the same time, yet in shadow mode (e.g. without the user knowing it), the feedback could be used to train (or fine-tune) an (own, e.g. newly set-up) expert model (e.g. (expert) AI/ML model), which may be rolled out once a predetermined confident level is achieved (i.e. once the expert model is understood, expected and/or considered to be confident or reliable enough (e.g. achieving a predetermined threshold value in relation to a correctness of provided mapping results)).

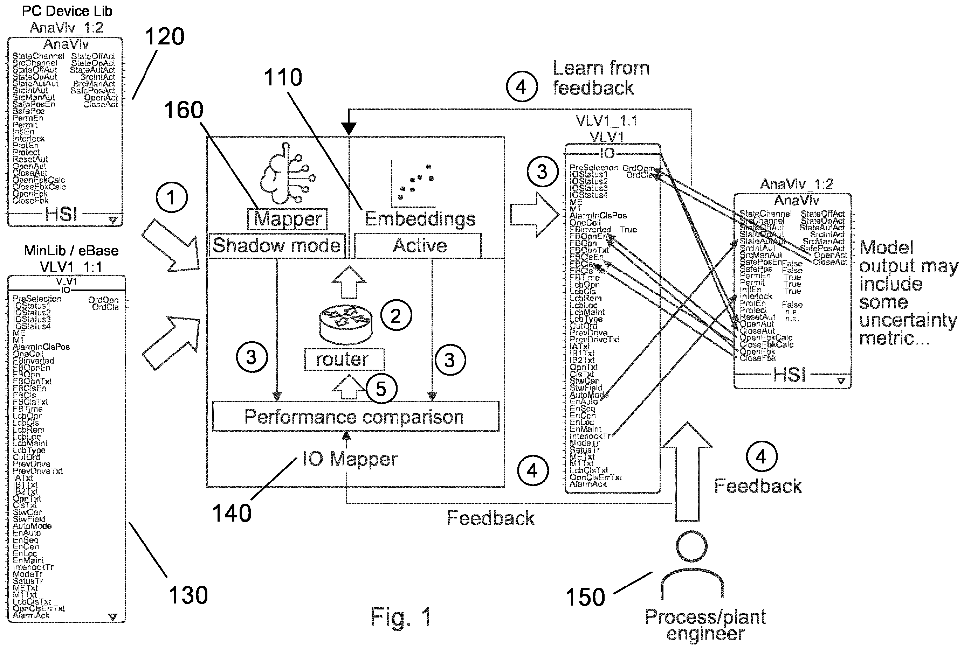

Reference is made to FIG. 1, which illustrates an example overview for an AI/ML model-based mapping and/or classifying process including a feedback loop. In more detail, it is illustrated a library 1-to-library 2-mapping, i.e. a lib1-to-lib2-mapping.

Referring now to FIG. 1, in Step 1, pre-trained embeddings 110 are used to map the inputs and outputs (IOs) of the libraries PC Device Lib 120 and MinLib / eBase 130. Indication number 1 in FIG. 1 indicates that a mapping is made between the libraries PC Device Lib 120 and MinLib / eBase 130 by use of an IO Mapper 140. The obtained embeddings 110 can indicate and provide the results with e.g. nearest neighbor search. Indication number 3 in FIG. 1 indicates that mapping results and/or classification results may be output.

In Step 2, the plant/process engineer (e.g. a user) 150 gives a feedback, e.g. in case the output obtained from the embeddings 110 is wrong. Indication number 4 in FIG. 1 indicates a feedback and a learning from feedback.

In Step 3, while the embeddings 110 are providing the results, an AI/ML model, which is illustrated as Mapper 160 in FIG. 1, is trained and operated in shadow mode. Such training and operating may be made on (different) unstructured text with classes and relations of the (different) unstructured text being based on the feedback. The term "different" may be understood as different (i.e. not identical) in comparison to the result (or output) provided by the embeddings 110. Unstructured text can be any characterizing elements, like e.g. the names, description, parameters and/or classes of the IOs.

In Step 4, the trained system (i.e. the trained Mapper 160) is used to map two libraries (e.g. the libraries PC Device Lib 120 and MinLib / eBase 130, or any different library/libraries) given their inputs and outputs. This can be done using a 2-step-approach or 1-step-approach.

In the 2-step-approach, the Mapper 160 can be used to classify the individual lOs of the libraries (e.g. the libraries PC Device Lib 120 and MinLib / eBase 130) to their respective standard classes. The Mapper 160 (a mapper class) then maps the standardized IOs to the different libraries.

In a 1-step-approach, the Mapper 160 directly gives the mapping between e.g. two libraries as output.

In Step 5, once the shadow model achieves a particular maturity, the embeddings 110 can be extended or replaced by the shadow model, i.e. by the Mapper 160 (previously trained and/or operated in shadow mode). Indication number 5 in FIG. 1 indicates that the performances of the embeddings 110 and the Mapper 160 may be compared. Based on a result of such comparison e.g. in relation to a predetermined performance threshold value to be achieved by the Mapper 160, it may be determined to extend the embeddings 110 by the Mapper 160.

In Step 6, the Mapper 160 learning from the feedback of the plant/process engineer 150 is done in the background.

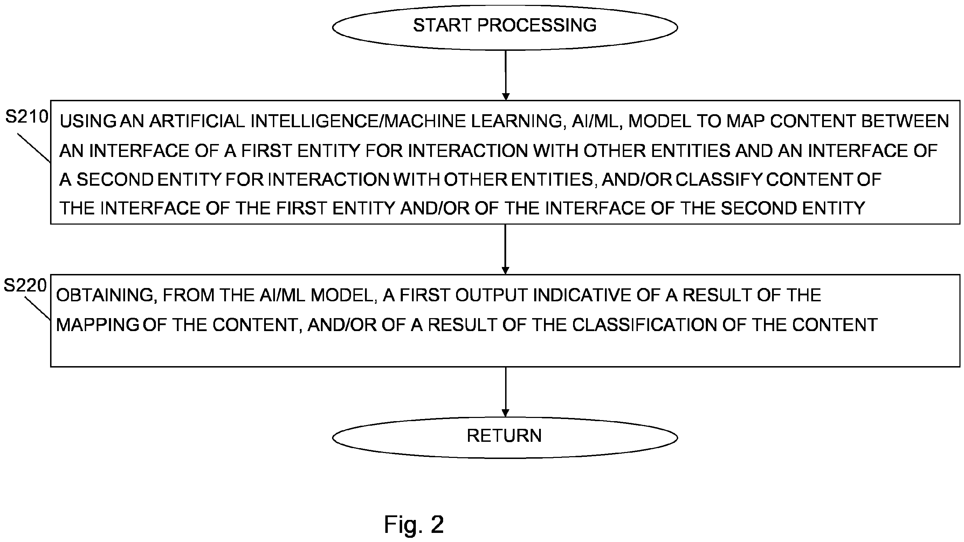

Referring now to FIG. 2, an example method in relation to AI/ML model-based mapping and/or classifying processes is illustrated according to various examples.

In Step S210, the method comprises using an artificial intelligence/machine learning, AI/ML, model to map content between an interface of a first entity for interaction with other entities and an interface of a second entity for interaction with other entities, and/or classify content of the interface of the first entity and/or of the interface of the second entity.

It shall be noted that such AI/ML model may represent such Mapper 160 as outlined above with reference to FIG. 1. Moreover, the interface of an entity may represent such library PC Device Lib 120 or MinLib / eBase 130 as outlined above with reference to FIG. 1. In addition, the term content may comprise any element included in the interface of an entity or in an entity, in relation to which an input may be input into the (interface of the) entity and/or in relation to which an output may be obtained from the (interface of the) entity. For example, with reference to the libraries shown in FIG. 1 for explanation purposes only, the content of the library MinLib / eBase 130 may have a content which comprises a content element named "Interlock Tr". Hence, an output obtained from the library MinLib / eBase 130 may thus be related to the content/content element named "Interlock Tr". Such output may be associated with certain characterizing elements, comprising e.g. a certain name, class, relation, parameter, schema and/or file format. In contrast thereto, the library PC Device Lib 120 may have a content which comprises a content element named "Interlock". Hence, an input into the library PC Device Lib 120 may thus be related to the content/content element named "Interlock". Such input may be associated with certain characterizing elements, comprising e.g. a certain name, class, relation, parameter, schema and/or file format. Hence, the AI/ML model may therefore be used to map an output of the library MinLib / eBase 130 (e.g. a source library) in relation to the content element named "Interlock Tr" to an input into the library PC Device Lib 120 (e.g. target library) in relation to the content element named "Interlock". Thus, a mapping between two different libraries given their respective inputs and outputs may be achieved. Such mapping is illustrated in FIG. 1 as an example.

In Step S220, the method further comprises obtaining, from the AI/ML model, a first output indicative of a result of the mapping of the content, and/or of a result of the classification of the content.

It shall be noted that such first output may be indicative of such mapping between the content elements "Interlock Tr" and "Interlock" as outlined above. Further, such first output may be indicative of such mapping result (and/or classification result) as illustrated in FIG. 1 between the libraries PC Device Lib 120 and MinLib / eBase 130.

It shall further be noted that such method as outlined above with reference to FIG. 2 allows for both, a library-to-library-mapping (lib-2-lib-mapping) and a standard-to-standard-mapping (standard-2-standard-mapping). For instance, in case the mapping of content (or the classifying of content) is made between two different entities (or between the respective interfaces of the two different entities), a lib-2-lib-mapping is obtained in case the two different entities are two different libraries. Further, in case the mapping of content (or the classifying of content) is made between the two different entities (or between the respective interfaces of the two different entities), wherein the two different entities are two different standards (and not two different libraries), a standard-2-standard-mapping is obtained. Similarly, the two different entities may represent different schemas or different file formats. Examples for libraries comprise e.g. MinLib and PC Device Lib. Examples for standards comprise e.g. Module Type Package""MTP"" (VDI-2658), eBase and DEXPI.

Moreover, according to various examples, the first entity may be at least one of a first engineering library or library (which may have a first content), a first standard, a first schema, and a first file format, and wherein the second entity may be at least one of a second engineering library or library (which may have a second content), a second standard, a second schema, and a second file format.

However, it shall be noted that the entities are not limited to these examples. Rather, as outlined above with reference to FIG. 2 and method Steps S210 as well as S220, such first and/or second entity/entities may be understood as being an entity with an interface for interaction with other entities.

Furthermore, according to various examples, the method may further comprise, e.g. prior to the using of the AI/ML model, using pre-trained embeddings to map content between an interface of a third entity for interaction with other entities and an interface of a fourth entity for interaction with other entities, and/or classify content of the interface of the third entity and/or of the interface of the fourth entity; obtaining, from the pre-trained embeddings, a second output indicative of a result of the mapping of the content, and/or of a result of the classification of the content; training and operating the AI/ML model in shadow mode based on a user feedback received in relation to the second output, and/or based on leveraged labeled data related to the second output; and, if the AI/ML model in shadow mode achieves a predetermined maturity, extending the pre-trained embeddings by the AI/ML model.

It shall be noted that the mapping by using the pre-trained embeddings may be understood that such "mapping" may result from: obtaining the embeddings of the contents, e.g. by means of using the pre-trained embeddings, and thereon-based conducting nearest neighbor search for identifying the "best fit" neighbor, i.e. the nearest neighbor (e.g. nearest content/embedding for a selected content/embedding).

It shall further be noted that such pre-trained embeddings may represent such embeddings 110 as outlined above with reference to FIG. 1. Further, the third and fourth entities may represent the first and/or second entity/entities or an entity/entities different therefrom. I.e., the first entity, which may e.g. be at least one of a first engineering library (or library), a first standard, a first schema, and a first file format, may be the same as the third entity, which may e.g. be at least one of a third engineering library (or library), a third standard, a third schema, and a third file format. Thus, the first engineering library, the first standard, the first schema and the first file format may be the same as the third engineering library, the third standard, the third schema and the third file format, respectively. The same may be true for the second entity in relation to the fourth entity.

Moreover, the term "extending" may be understood in that an extension could e.g. consist in using the original model, i.e. the pre-trained embeddings, but with additional information contained in the feedback-based model, i.e. the (trained) AI/ML model. However, extending may also be understood in that the original model, i.e. the pre-trained embeddings, is not used further, but that the feedback-based model, i.e. the (trained) AI/ML model is used. Hence, e.g. as appropriate, both models may be used together, i.e. in combination with each other, so that e.g. a synergistic effect may be achieved, or both models may be used separately.

Furthermore, according to various examples, such third entity may be at least one of a third engineering library or library (which may have a third content), a third standard, a third schema, and a third file format, and wherein the fourth entity may be at least one of a fourth engineering library or library (which may have a fourth content), a standard, a fourth schema, and a fourth file format.

Moreover, according to various examples, the obtaining of the first output may be based on a one-step-approach or on a two-step-approach, the first output being a result of a mapping according to the one-step-approach or of a mapping according to the two-step-approach. The one-step-approach may comprise: using the AI/ML model to map the content between the interface of the first entity and the interface of the second entity given inputs and outputs provided via the respective interfaces, the inputs and outputs related to the content. The two-step-approach may comprise: using the AI/ML model to classify the content of the interface of the first entity and/or of the interface of the second entity given inputs and outputs provided via at least one of the respective interfaces, the inputs and outputs related to the content; and using the AI/ML model to map the classified inputs and the classified outputs to the interface of the first entity and/or the interface of the second entity.

It shall be noted that such one-step-approach and two-step-approach may represent such 1-step-approach and such 2-step-approach as outlined above with reference to FIG. 1, Step 4.

Moreover, according to various examples, the mapping and/or classifying given the inputs and the outputs may comprise: inputting a first entity input and/or a first entity output related to the content of the interface of the first entity into the AI/ML model, wherein the first entity input and/or the first entity output is related to a first content element of the first entity, the first content element being at least one of a first name, a first class, a first concept, a first relation and a first parameter, and the first entity representing a source entity; based on the first entity input and/or the first entity output, receiving a model output from the AI/ML model, wherein the model output is related to a second content element different from the first content element, the second content element being at least one of a second name, a second class, a second concept, a second relation and a second parameter, and/or wherein the model output is based on a training of the AI/ML model; and determining, for the model output, a match to a second entity input and/or a second entity output related to the content of the interface of the second entity in relation to at least one of a name, a class, a concept, a relation and a parameter, wherein the second entity represents a target entity. The model output may be associated with the first output.

It shall be noted that such "first entity output" may represent an output related to the content element "Interlock Tr" as outlined above in relation to FIGs 1 and 2, wherein the "second entity input" may represent an input related to the content element "Interlock" as outlined above in relation to FIGs 1 and 2. The "model output" may be understood the represent the "first entity output" and/or the "second entity input". Hence, the "model output" may be understood to represent a result that the "first entity output" related to the content element "Interlock Tr" may be mapped to the "second entity input" related to the content element "Interlock".

Further, according to various examples, the determining of the matching may comprise at least one of: determining a 1-to-1-matching between the first entity input and/or the first entity output and the second entity input and/or the second entity output; determining a 1-to-many-matching between the first entity input and/or the first entity output and the second entity input and/or the second entity output; determining a many-to-1-matching between the first entity input and/or the first entity output and the second entity input and/or the second entity output; and determining a many-to-many-matching between the first entity input and/or the first entity output and the second entity input and/or the second entity output.

Furthermore, according to various examples, using the AI/ML model may be based on or may comprise making use of one of: Obtaining through Natural Language Processing (NLP) methods joint embedding representations and conducting thereon-based a nearest neighbor-search; Named Entity Recognition, NER (e.g. Transformer-based); and Graph-Neural Networks, Graph-NNs.

However, it shall be noted that using the AI/ML model may not be understood as being limited to making use of one of Joint embeddings and nearest neighbor-search, Named Entity Recognition, NER, and Graph-Neural Networks, Graph-NNs. Indeed, e.g. the usage of the AI/ML model as outlined above with reference to FIG. 2 and method Steps S210 as well as S220 shall not be understood as being limited to one (or several) specific methods.

Additionally, according to various examples, the method may further comprise using a knowledge-based component associated with the AI/ML model, which uses underlying knowledge representation systems, possibly in combination with Graph-NNs, to exploit graph-contained information via the interface of the first entity and/or the interface of the second entity; and further considering the exploited graph-contained information for the mapping and/or the classification related to the interface of the first entity and/or the interface of the second entity.

Moreover, according to various examples, the method may further comprise, if the result indicated by the first output comprises an uncertainty value equal to or above a predetermined uncertainty threshold [the output mapping result or classification result obtained from the AI/ML model is uncertain], providing the result to a user for confirmation; and feeding a decision received by the user about whether or not to accept the result back to a knowledge-base associated with the AI/ML model and/or to the AI/ML model.

Furthermore, according to various examples, the content may be related to at least one of concepts, namings, classes, relations, parameters, method signatures and method functionalities. It shall be noted that such content may be understood to be obtained (like e.g. received, accessed, provided and/or output) in/via the interfaces of the respective entities.

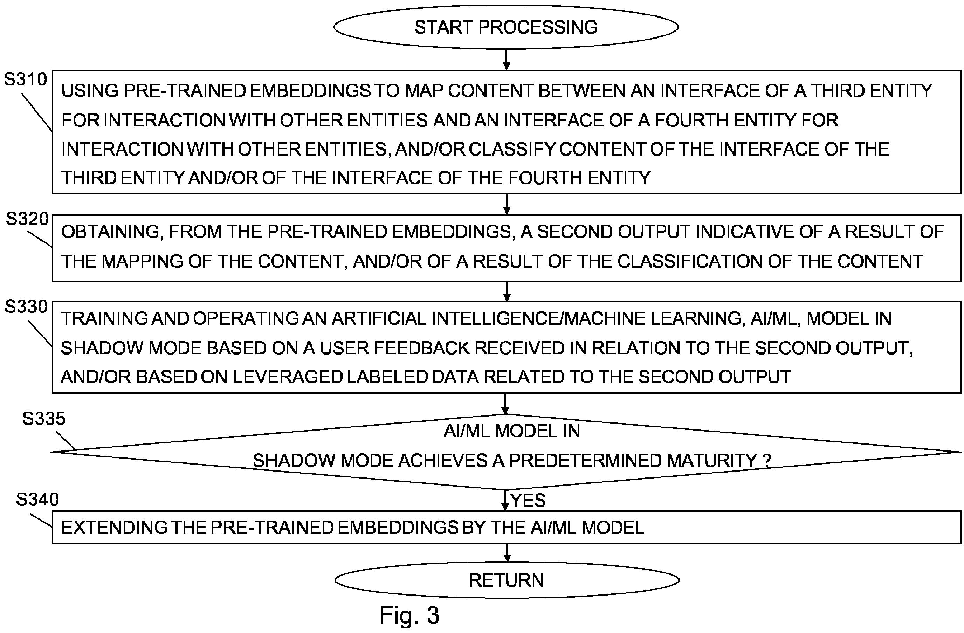

Referring now to FIG. 3, an example method in relation to AI/ML model-based mapping and/or classifying processes is illustrated according to various examples.

In Step S310, the method comprises using pre-trained embeddings to map content between an interface of a third entity for interaction with other entities and an interface of a fourth entity for interaction with other entities, and/or classify content of the interface of the third entity and/or of the interface of the fourth entity.

In Step S320, the method comprises obtaining, from the pre-trained embeddings, a second output indicative of a result of the mapping of the content, and/or of a result of the classification of the content.

In Step S330, the method comprises training and operating an artificial intelligence/machine learning, AI/ML, model in shadow mode based on a user feedback received in relation to the second output, and/or based on leveraged labeled data related to the second output.

In Step S335, if the AI/ML model in shadow mode achieves a predetermined maturity (YES in S335), the method comprises in Step S340 extending the pre-trained embeddings by the AI/ML model.

It shall be noted that the AI/ML model may represent such Mapper 160 as illustrated with regard to FIG. 1 and/or such AI/ML model as outlined with regard to FIG: 2. Further, the pre-trained embeddings may represent such embeddings 110 as illustrated with regard to FIG. 1 and/or such pre-trained embeddings as outlined with regard to FIG: 2. Moreover, the content as well as entities may be understood to represent such content and entities as outlined above with reference to FIG. 2. Hence, the third entity may e.g. be the same as the first entity (as outlined above) and the fourth entity may be the same as the second entity (as outlined above). Furthermore, Steps S330, S335 and S340 may represent at least part of such process at outlined above with reference to FIG. 1, Steps 4 and 5.

Furthermore, according to various examples, a control apparatus for a mapping and/or classifying control system is disclosed, wherein the control apparatus is configured to carry out the methods as outlined above with reference to FIGs 1 to 3. For instance, the control apparatus may comprise a processor and a memory for storing instructions, which, when executed by the processor, may cause the control apparatus to e.g. execute the method steps as outlined above with reference to FIG.s 2 and 3. For such execution, the control apparatus may comprise several functional portions, e.g. a mapping and/or classification portion to carry out a process according to Step 210 of FIG. 2, and an obtaining portion to carry out a process according to Step 220 of FIG. 2. Additionally and/or alternatively, the control apparatus may comprise several functional portions, e.g. an embedding portion to carry out a process according to Step 310 of FIG. 3, an obtaining portion to carry out a process according to Step 320 of FIG. 3, a training and/or operating portion to carry out a process according to Step 330 of FIG. 3, and an extending portion to carry out a process according to Step 340 of FIG. 3. Further, such portions may be understood to represent means for carrying out the certain function or to represent portions, which are configured to carry out the certain function.

Further, according to various examples, a mapping and/or classifying control system is disclosed, which is configured to carry out the methods and/or method steps as outlined above with reference to FIGs. 1 to 3.

Moreover, according to various examples, an industrial automation system is disclosed, which comprises the control apparatus and/or the mapping and/or classifying control system.

Further, according to various examples, a computer-readable medium comprising instructions is disclosed, which, when executed by a computing system, cause the computing system to perform the methods and/or method steps as outlined above with reference to FIGs. 1 to 3.

Additionally, according to various examples, the methods and/or method steps as outlined with reference to FIGs. 1 to 3 may be computer implemented.

Further, according to various examples, there is provided a computing system configured to perform the methods and/or method steps as outlined above with reference to FIGs. 1 to 3.

Moreover, according to various examples, there is provided a computer program (product) comprising instructions which, when executed by a computing system, enable or cause the computing system to perform the methods and/or method steps as outlined above with reference to FIGs. 1 to 3.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### Reference signs:

110: embeddings; 120, 130: libraries; 140: IO Mapper; 150: user; 160: Mapper

## Claims

1. A method, comprising:
using an artificial intelligence/machine learning, AI/ML, model to
map content between an interface of a first entity for interaction with other entities and an interface of a second entity for interaction with other entities,
and/or
classify content of the interface of the first entity and/or of the interface of the second entity; and
obtaining, from the AI/ML model, a first output indicative
of a result of the mapping of the content,
and/or
of a result of the classification of the content.

2. The method according to claim 1,
wherein the first entity is at least one of
a first engineering library,
a first standard,
a first schema, and
a first file format,
and wherein the second entity is at least one of
a second engineering library,
a second standard,
a second schema, and
a second file format.

3. The method according to claim 1 or 2, further comprising:
using pre-trained embeddings to
map content between an interface of a third entity for interaction with other entities and an interface of a fourth entity for interaction with other entities,
and/or
classify content of the interface of the third entity and/or of the interface of the fourth entity;
obtaining, from the pre-trained embeddings, a second output indicative
of a result of the mapping of the content,
and/or
of a result of the classification of the content;
training and operating the AI/ML model in shadow mode
based on a user feedback received in relation to the second output, and/or
based on leveraged labeled data related to the second output; and
if the AI/ML model in shadow mode achieves a predetermined maturity, extending the pre-trained embeddings by the AI/ML model.

4. A method, comprising:
using pre-trained embeddings to
map content between an interface of a third entity for interaction with other entities and an interface of a fourth entity for interaction with other entities,
and/or
classify content of the interface of the third entity and/or of the interface of the fourth entity;
obtaining, from the pre-trained embeddings, a second output indicative
of a result of the mapping of the content,
and/or
of a result of the classification of the content;
training and operating an artificial intelligence/machine learning, AI/ML, model in shadow mode
based on a user feedback received in relation to the second output, and/or
based on leveraged labeled data related to the second output; and
if the AI/ML model in shadow mode achieves a predetermined maturity, extending the pre-trained embeddings by the AI/ML model.

5. The method according to claim 3 or 4,
wherein the third entity is at least one of
a third engineering library ,
a third standard,
a third schema, and
a third file format,
and wherein the fourth entity is at least one of
a fourth engineering library,
a fourth standard,
a fourth schema, and
a fourth file format.

6. The method according to any of claims 1 to 5, wherein the obtaining of the first output is based on a one-step-approach or on a two-step-approach, the first output being a result of a mapping according to the one-step-approach or of a mapping according to the two-step-approach,
the one-step-approach comprising:
using the AI/ML model to map the content between the interface of the first entity and the interface of the second entity given inputs and outputs provided via the respective interfaces, the inputs and outputs related to the content;
the two-step-approach comprising:
using the AI/ML model to classify the content of the interface of the first entity and/or of the interface of the second entity given inputs and outputs provided via at least one of the respective interfaces, the inputs and outputs related to the content; and
using the AI/ML model to map the classified inputs and the classified outputs to the interface of the first entity and/or the interface of the second entity.

7. The method according to claim 6, wherein the mapping and/or classifying given the inputs and the outputs comprises:
inputting a first entity input and/or a first entity output related to the content of the interface of the first entity into the AI/ML model, wherein the first entity input and/or the first entity output is related to a first content element of the first entity,
the first content element being at least one of a first name, a first class, a first concept, a first relation and a first parameter, and the first entity representing a source entity;
based on the first entity input and/or the first entity output, receiving a model output from the AI/ML model, wherein the model output is related to a second content element different from the first content element, the second content element being at least one of a second name, a second class, a second concept, a second relation and a second parameter, and/or wherein the model output is based on a training of the AI/ML model; and
determining, for the model output, a match to a second entity input and/or a second entity output related to the content of the interface of the second entity in relation to at least one of a name, a class, a concept, a relation and a parameter, wherein the second entity represents a target entity,
wherein the model output is associated with the first output.

8. The method according to claim 7, wherein the determining of the matching comprises at least one of:
determining a 1-to-1-matching between the first entity input and/or the first entity output and the second entity input and/or the second entity output;
determining a 1-to-many-matching between the first entity input and/or the first entity output and the second entity input and/or the second entity output;
determining a many-to-1-matching between the first entity input and/or the first entity output and the second entity input and/or the second entity output; and
determining a many-to-many-matching between the first entity input and/or the first entity output and the second entity input and/or the second entity output.

9. The method according to any of claims 1 to 8, wherein using the AI/ML model comprises making use of one of:
Joint embeddings and nearest neighbor-search,
Named Entity Recognition, NER, and
Graph-Neural Networks, Graph-NNs.

10. The method according to any of claims 1 to 9, further comprising:
using a knowledge-based component associated with the AI/ML model, which uses underlying knowledge representation systems to exploit graph-contained information via the interface of the first entity and/or the interface of the second entity; and
further considering the exploited graph-contained information for the mapping and/or the classification related to the interface of the first entity and/or the interface of the second entity.

11. The method according to any of claims 1 to 10, further comprising:
if the result indicated by the first output comprises an uncertainty value equal to or above a predetermined uncertainty threshold, providing the result to a user for confirmation; and
feeding a decision received by the user about whether or not to accept the result back to a knowledge-base associated with the AI/ML model and/or to the AI/ML model.

12. The method according to any of claims 1 to 11, wherein the content is related to at least one of concepts, namings, classes, relations, parameters, units, method signatures and method functionalities.

13. A controller for a mapping and/or classifying control system, the controller being configured to carry out the method of any of claims 1 to 12.

14. A mapping and/or classifying control system configured to carry out the method of any of claims 1 to 12.

15. An industrial automation system comprising the controller of claim 13 and/or the mapping and/or classifying control system of claim 14.

16. A computer-readable medium comprising instructions which, when executed by a computing system, cause the computing system to perform the method of any of claims 1 to 12.
